# FASCICULE DE BREVET EUROPEEN

(11) **EP 2 055 387 B1**
(45) Date de publication et mention de la délivrance du brevet: **27.02.2013**
(21) Numéro de dépôt: 08356138.1
(22) Date de dépôt: 27.10.2008
(51) Int. Cl.: B03B 1/04, B03D 3/06, C04B 20/02, C09C 1/42

(54) **Procédé de traitement d'un mélange comprenant des granulats et des matières argileuses**
Verfahren zur Behandlung einer Mischung, die Granulat und lehmhaltige Materialien enthält
Method of treating a mixture comprising granulates and argillaceous materials

(30) Priorité: 30.10.2007 FR 0707623; 23.11.2007 FR 0708210
(43) Date de publication de la demande: 06.05.2009
(73) Titulaire: Lafarge, 75116 Paris (FR)
(72) Inventeur: Taylor, Richard, Welford Northants NN6 6JJ (GB); Richard, Nicolas, 38460 Crémieu (FR); Villard, Emmanuel, 42320 Saint-Christo-en-Jarez (FR); Toubeau, Philippe, 38300 Ruy (FR); Brocas, Stéphane, 69270 Fontaine sur Saône (FR)
(74) Mandataire: Berruet, Laure

(56) Documents cités:
- US-A- 4 702 820

## Description

Le domaine de l'invention est le traitement de mélanges comprenant des granulats et des matières argileuses, tels que des produits de scalpage (ou scalping), et particulièrement la séparation des matières argileuses des granulats.

On appelle granulat un ensemble de grains minéraux de dimensions comprises entre 0 et 125 mm. Les granulats sont une des matières premières de tous travaux de Génie civil. Plus particulièrement, ils sont utilisés dans la fabrication des mortiers, des bétons, des couches de fondation, de base et de roulement, des chaussées ainsi que dans la fabrication des assises de voies ferrées en tant que ballast. La plus grande partie des granulats utilisés sont d'origine naturelle et sont extraits de carrières. II est donc important de maîtriser l'ensemble de leurs propriétés y compris leur propreté.

La propreté des granulats est une nécessité industrielle. La présence de boues, d'argiles ou de poussières mélangées ou enrobant les granulats, peut dégrader la performance des bétons ou des enrobés. Elle peut par exemple générer une réduction de l'adhérence granulat-bitume, et entraîner une baisse de résistance de ces matériaux, ce qui limite ou même interdit leur utilisation. Aussi les granulats doivent avoir des caractéristiques conformes aux normes en vigueur, et en particulier un degré de propreté répondant aux spécifications de ces normes.

Le produit de scalpage est un sous-produit de l'exploitation des carrières. Ce produit consiste en un mélange comprenant notamment et majoritairement des granulats et des argiles. Il n'est pas rare dans les carrières, et particulièrement les gisements de calcaire dur, d'observer des altérations de matériau au niveau du premier étage d'exploitation, altérations consécutives aux accidents tectoniques (failles diaclases). Elles se traduisent par des infiltrations de limon plus ou moins argileux, voire des remplissages de « poches » résultant de la disparition de la roche. Cette pollution se concentre dans les fractions granulaires basses du tout venant (aussi appelées les fines). Pour l'éliminer et ne traiter dans l'installation de concassage-criblage que des matériaux présentant un bon potentiel de qualité, qui permettent de produire des sables, gravillons et ballast respectant les normes de propreté, il est d'usage d'extraire (ou de « scalper ») avant le poste primaire de concassage -criblage cette fraction granulaire basse. Les produits résultants de cette opération, ou produits de scalpage, sont souvent mis en dépôt qui, au fil du temps, forment de véritables terrils. Ces terrils bloquent ainsi des surfaces conséquentes au niveau même des exploitations. Les produits de scalpage sont par ailleurs des matières extraites non valorisées. Les matières extraites peuvent par ailleurs, dans certains pays, donner lieu au paiement d'une taxe « environnementale », pour limiter la quantité de matière extraite et favoriser l'utilisation de matériaux recyclés. Il est donc intéressant de valoriser la plus grande proportion possible de matières extraites.

La valorisation des produits de scalpage est donc d'un grand intérêt. Un moyen pour valoriser ces produits de scalpage est de séparer les fractions grossières de la fraction argileuse et ainsi permettre l'utilisation des granulats. Cependant la présence d'argiles associée à un taux d'humidité élevé empêche d'utiliser simplement le criblage pour effectuer cette séparation, les fines argileuses colmatant les grilles de criblage et faisant obstacle à la séparation des granulats et des argiles.

Ce problème s'étend à d'autres mélanges de granulats tels que ceux qui sont obtenus à la suite de travaux d'excavation ou proviennent des chantiers de constructions ou encore des travaux de maintenance des chaussées. Ces produits de récupération sont constitués d'un mélange de terre et de granulats qu'il est, là encore, difficile de séparer et donc de recycler.

Que ce soit pour les produits de récupération ou pour les produits de scalpage, il est possible de procéder à une étape de lavage pour effectuer la séparation entre granulats et matières argileuses (et/ou la terre) mais le volume d'eau nécessaire à cette opération est très élevé et est un frein important pour exploiter industriellement cette solution. De plus cette opération de lavage nécessite à posteriori de mobiliser une fois de plus des zones de foncier pour permettre aux boues de s'essorer dans de grands bassins de décantation.

Alternativement les mélanges comprenant des granulats et des matières argileuses peuvent être traités à la chaux pour assécher et coaguler les argiles et les rendre ainsi criblables. Cependant un tel traitement implique l'utilisation de grandes quantités de chaux. La chaux étant un produit nocif, irritant et pulvérulent (donc inhalable), sa manipulation engendre des risques importants pour les manipulateurs.

Les floculants anioniques à haut poids moléculaires sont généralement utilisés pour effectuer des séparations de matériaux indésirables en milieu liquide. Ces matériaux sont mis en présence d'un floculant en milieu liquide et les particules floculées sont séparées en décantant par gravité ou par filtration. Il s'agit d'une séparation liquide/solide dans laquelle le floculant permet d'agglomérer les fines afin d'accélérer leur décantation et au final la séparation.

Ainsi la demande de brevet FR 2556239 décrit un procédé pour extraire un combustible, comme un sable bitumineux, d'une gangue argileuse par mise en solution dans un milieu alcalin aqueux et chauffage à haute température. Selon une variante de ce procédé un floculant peut être ajouté au mélange liquide pour améliorer la séparation par décantation et filtration. Il s'agit là encore d'une séparation liquide/solide.

Les demandes PCT WO 96/17688 et WO 98/11993 décrivent un procédé de séparation de particules d'argiles de poudres minérales dans un milieu aqueux par floculation sélective et décantation. Il s'agit encore une fois d'une séparation en milieu liquide. Le floculant utilisé est un polymère anionique à haut poids moléculaire qui peut être un copolymère d'acrylamide et d'acide acrylique.

Le brevet des Etats-Unis US 3,572,500 décrit un procédé de purification de poudres de roches de diatomées comprenant plusieurs étapes successives en milieu liquide. Au cours de l'une d'elles des polymères de type polyacrylamide peuvent être utilisés pour concentrer le mélange et permettre une meilleure filtration de celui-ci. Il s'agit à nouveau d'une séparation liquide/solide.

Le brevet américain US 4,702,820 décrit un procédé de prétraitement comprenant au moins un élément combustible dont la gangue comporte des composés argileux susceptibles de former une suspension plastique stable en présence d'eau.

Les séparations liquide/solide ont plusieurs inconvénients, et notamment celui de consommer beaucoup d'eau. De plus, il faut consacrer de grandes surfaces pour le séchage des matières séparées, ces surfaces étant perdues pour une exploitation éventuelle. Enfin, il faut prévoir une étape supplémentaire de recyclage de l'eau.

L'invention concerne un procédé de valorisation de mélanges comprenant des granulats et des matières argileuses, tels que des produits de scalpage, ou des produits de récupération, ce procédé ne présentant pas tous les inconvénients et désavantages de l'art antérieur.

Ainsi un premier objet selon l'invention est un procédé de traitement d'un mélange comprenant des granulats et des matières argileuses (par exemple de la terre), ledit procédé comprenant une étape de malaxage d'un floculant à haut poids moléculaire avec ledit mélange de granulats et de matières argileuses, suivie d'une étape de fractionnement (ou de séparation), ledit procédé étant caractérisé en ce qu'il est effectué sans ajout significatif de solvant.

On entend par le terme « traitement » tout procédé permettant de valoriser les granulats compris dans les mélanges, c'est-à-dire permettant leur utilisation, notamment dans les domaines de la construction et de la route. En particulier, le terme traitement s'applique à la séparation des granulats et des argiles ou autres fines.

On entend par l'expression « mélange comprenant des granulats et des matières argileuses » tout mélange comprenant majoritairement des granulats et des argiles, et notamment des produits de scalpage ou de récupération, tels que décrits ci-avant. Les mélanges comprenant des granulats et des matières argileuses peuvent contenir en outre d'autres matériaux minoritaires, comme par exemple des fines de sable ou des matières organiques.

Par « matières argileuses » on désigne aussi bien un matériau constitué essentiellement d'argiles, que diverses matières contenant en majorité ou en partie de l'argile, telle que, par exemple, de la terre.

Un solvant est, pour un milieu donné, un composé très largement majoritaire (par exemple d'un facteur 100) qui possède la propriété de diluer ou dissoudre d'autres substances sans les transformer chimiquement. L'eau est le solvant le plus courant. Le procédé de l'invention n'est pas effectué en présence significative d'un solvant.

L'expression « sans ajout significatif de solvant » signifie en d'autres termes que le procédé selon l'invention est un procédé réalisé essentiellement à sec. Les expressions « essentiellement à sec » et « sans ajout significatif de solvant » expriment le fait que le procédé de traitement selon l'invention, par opposition à des procédés de traitement effectués en milieu liquide et en présence d'un solvant, est effectué en milieu solide ou visqueux.

Dans un mode de réalisation selon l'invention, un ajout de solvant inférieur ou égal à 15% en poids par rapport au poids total de l'ensemble (floculant + mélange comprenant des granulats et des matières argileuses), avantageusement inférieur ou égal à 12,5%, peut être effectué dans le procédé de traitement. Le pourcentage en poids indiqué de solvant par rapport au poids total de l'ensemble indique la limite maximale d'ajout de solvant utilisable dans le procédé de traitement selon l'invention effectué en milieu visqueux.

Par opposition aux séparations classiques liquide/solide, le procédé selon l'invention est de préférence une séparation solide/solide.

Le procédé selon l'invention comprend l'utilisation d'un floculant de haut poids moléculaire, de préférence supérieur à 1 000 000 g/mol et avantageusement supérieur à 3 000 000 g/mol pour rendre possible ou améliorer le fractionnement ou la séparation mécanique à sec (par exemple par tamisage ou criblage) d'au moins une partie de la phase argileuse présente dans un mélange comprenant des granulats et des matières argileuses. Selon un mode de réalisation de l'invention particulièrement préféré le polymère floculant utilisé présente un poids moléculaire supérieur à 10 000 000 g/mol, par exemple 20 000 000 g/mol.

Une étape de fractionnement (ou séparation), particulièrement par criblage ou tamisage, peut alors être mise en oeuvre pour séparer au moins une partie des matières, ou fines, argileuses d'au moins une partie des granulats. Ces granulats peuvent alors être réintroduits dans la chaîne de traitement principale ou être utilisés tels quels.

Le floculant peut avantageusement être une molécule organique de type polymère. De préférence le floculant est un copolymère, avantageusement un copolymère acrylamide/monomère anionique, tel qu'un copolymère acrylamide/acide (meth)acrylique. Alternativement le copolymère peut être du type copolymère acrylamide/monomère cationique tel qu'un copolymère acrylamide/dialkylaminoalkyl (meth)acrylates quaternisés.

Un copolymère acrylamide/acrylate de sodium (ou d'acide acrylique) a permis d'obtenir une floculation de bon niveau. Il convient de noter que la notation « (meth)acrylique » désigne un composé méthacrylique ou acrylique. Des proportions respectives d'environ un tiers d'acrylamide pour deux tiers d'acrylate de sodium dans ce copolymère permet d'obtenir des résultats avantageux. Plus particulièrement un rapport 30/70 d'acrylamide/acrylate de sodium apparaît un rapport particulièrement avantageux.

D'autres polymères à haut poids moléculaire peuvent également être considérés. Ces polymères peuvent être constitués d'un même ou de différents monomères. Ces monomères peuvent être :
- non ioniques : de type (meth)acrylamide
- cationiques : de type dialkylaminoalkyl (meth)acrylate, dialkylaminoalkyl (meth)acrylamide, diallylamine, methyldiallylamine, et des leurs sels, en particulier leurs sels d'ammonium quaternaire obtenus par alkylation ou protonation ; et
- anioniques : tels que les monomères possédant une fonction carboxylique (ex: acide acrylique, acide méthacrylique, acide maléique, acide itaconique, et leurs sels...), les monomères possédant une fonction acide sulfonique (ex: acide 2-acrylamido-2- méthylpropane sulfonique (AMPS)) et leurs sels.

Des résultats positifs ont été obtenus pour des dosages de floculant (polymère) aussi faibles que 200 ppm . Une gamme de dosage de 0,02 à 0,06 % en poids de mélange sec comprenant des granulats et des matières argileuses, préférentiellement 0,03 à 0,055 %, est préférée pour la mise en pratique du procédé selon l'invention. Il convient de noter que pour obtenir un résultat équivalent par traitement à la chaux, la proportion de chaux vive utilisée serait de 1 à 3% en poids de mélange sec comprenant des granulats et des matières argileuses. Ainsi le procédé selon l'invention peut présenter une réduction importante de la quantité d'adjuvant utilisée par rapport à la quantité utilisée lors d'un traitement à la chaux.

De plus l'utilisation d'une forme liquide et plus particulièrement d'une émulsion inverse (de type eau-dans-huile) du floculant permet d'obtenir des résultats particulièrement intéressants en terme de qualité (propreté) des fractions grossières ainsi qu'en terme de facilité d'utilisation (facilité de dispersion/vitesse de mise en solution). L'émulsion inverse peut être ajoutée telle quelle au mélange comprenant des granulats et des matières argileuses sans dilution préalable. Le dosage et le malaxage avec le mélange comprenant des granulats et des matières argileuses sont réalisés très facilement du fait de la forme liquide. Enfin, un polymère en émulsion inverse est dispersé dans un milieu organique sous forme de particules de l'ordre du micron, donc mis en solution beaucoup plus rapidement qu'une forme poudre. D'autre part la forme liquide de l'émulsion inverse permet de répartir le polymère plus facilement et de façon plus homogène sur le matériau à traiter.

Ainsi, bien qu'un liquide puisse être utilisé comme support du floculant, celui-ci n'est pas un solvant au sens de l'invention puisqu'il n'est, de loin, pas majoritaire dans le milieu créé par le mélange comprenant des granulats et des matières argileuses et le floculant.

Cependant un floculant sec sous forme de poudre peut-être utilisé pour réaliser l'invention. Dans ce cas une forme micronisée (<150 microns) est préférée.

Le procédé selon l'invention est particulièrement adapté à la valorisation d'un mélange comprenant des granulats et des matières argileuses ayant une humidité comprise entre 1 et 10% (pourcentage massique par rapport au poids du mélange comprenant des granulats et des matières argileuses), de préférence entre 1 et 8%, et plus particulièrement entre 2,5 et 8%. Un matériau présentant une humidité inférieure à 1% pourrait éventuellement être criblé sans traitement préalable. Au contraire, pour un matériau présentant une humidité supérieure à 10%, le traitement selon l'invention pourrait être moins efficace. De manière générale, plus l'humidité du matériau à traiter est importante, moins le procédé selon l'invention donne de bons résultats.

De préférence, le mélange comprenant des granulats et des matières argileuses présente une teneur en fines (ou matières) argileuses inférieure à 20%. Les notions de teneur en fines et humidité sont liées, dans la mesure où plus les fines sont nombreuses, plus l'humidité du matériau à traiter peut être importante, pour une efficacité équivalente du procédé selon l'invention.

Il convient également de noter la grande simplicité du procédé puisque selon un mode de réalisation préféré une simple étape de malaxage du floculant et du mélange comprenant des granulats et des matières argileuses précède immédiatement la séparation des fines argileuses d'avec les granulats.

Un deuxième objet selon l'invention porte sur l'utilisation d'un floculant tel que décrit ci-dessus pour le traitement sans ajout significatif de solvant d'un mélange comprenant des granulats et des matières argileuses.

Selon une variante préférée de l'invention le mélange comprenant des granulats et des matières argileuses est constitué de produits de scalpage.

Certains modes de réalisation préférentiels ainsi que des tests comparatifs sont exemplifiés ci-dessous.

### Exemples

### 1. Mode opératoire :

Les tests dont les résultats sont présentés dans les tableaux de résultats ci-dessous ont été obtenus selon le procédé suivant :

Les mélanges traités dans ces exemples sont des produits de scalpage provenant des carrières de l'Estaque (carrière de roches calcaires micritiques, France), de Llynclyss (carrière de roches calcaires bioclastiques, Royaume-Uni) et de Dowlow (carrière de roches bioclastiques, Royaume-Uni) et sont obtenus, soit par prélèvement avant la phase de concassage à l'aide d'un scalpeur, soit par criblage après le concasseur primaire.

Les produits de scalpage (ou scalping) obtenus ont été homogénéisés et partagés en lot de 20 Kg puis ont été introduits dans la cuve d'un malaxeur de 30 litres de marques ZYKLOS.

Une première phase d'homogénéisation du produit de scalpage est réalisée par malaxage de 15 secondes.

Pour étudier l'effet de différents degrés d'humidité, l'étape d'homogénéisation peut être suivie par l'introduction dans le malaxeur (en 15 secondes), tout en poursuivant le malaxage, de la quantité d'eau nécessaire pour ajuster l'humidité du produit de scalpage à la valeur souhaitée. Cet ajout est effectué pour tester différents degrés d'humidité et n'est donc pas une étape nécessaire du procédé selon l'invention. Le mélange eau/produit de scalpage est malaxé pendant 30 secondes.

Une fois l'étape d'homogénéisation (suivie éventuellement d'une étape de malaxage) réalisée, le malaxage est alors stoppé pour introduire le polymère en le répartissant de façon homogène sur toute la surface du produit de scalpage humide. Ce mélange est malaxé pendant 30 secondes et une première observation de l'aspect du produit de scalpage a lieu, suivie, si nécessaire d'un second malaxage de 30 secondes.

Le temps de malaxage et l'aspect visuel du produit de scalpage sont notés et le malaxeur vidangé. Le produit de scalpage traité est alors criblé en utilisant une série de cribles et l'aspect visuel des cribles est noté.

Pour l'étape de séparation par criblage, l'équipement utilisé dans ces exemples est un crible vibrant ayant des grilles de 6 et 10mm qui sont installées de manière à obtenir trois fractions distinctes. Le produit de scalpage à cribler est introduit dans la trémie du crible. Le niveau de vibration est maintenu constant pour l'ensemble des exemples.

La propreté de chaque fraction séparée est évaluée selon la méthode courante en mesurant la valeur au bleu de méthylène ou MBV (en g de colorant adsorbé/kg de matière). La mesure est réalisée sur la totalité de la fraction séparée.

La valeur au bleu de méthylène est le résultat d'un test normalisé (NF EN 933.9) qui permet d'estimer la propreté d'un sable en « évaluant » la nocivité des impuretés présentes. Il s'agit de mettre en contact le bleu de méthylène (un colorant cationique bien connu) et la matière à analyser. Le colorant cationique est adsorbé sur l'argile jusqu'à saturation des sites anioniques portés par celle-ci. La valeur au bleu de méthylène correspond à la quantité de colorant adsorbé à saturation sur les particules d'argiles présentes dans la fraction concernée (0-2mm pour les sables).

### 2. Efficacité du procédé

Le procédé selon l'invention a été mis en pratique en utilisant des produits de scalpage de différentes origines et pour différents degrés d'humidité. Le polymère utilisé est un polymère de type anionique acrylamide/acrylate de sodium 30/70 commercialisé par la société SNF Floerger. Le procédé mis en pratique est celui décrit ci-dessus. Des tests comparatifs où les produits de scalpage ne sont pas traités par un floculant ont également été réalisés pour les produits provenant des carrières de Dowlow et de Llynclys. Les résultats sont présentés dans le tableau 1.

**Tableau 1**

| **Scalping** | **Fine <63 mic.** | **Traitement** | **Forme** | **Dosage** | **Humidité** | **Tps de malaxage** | **Aspect** | **Séparation** | **MBV en g/kg 6/10mm** | **MBV en g/kg >10mm** |
|---|---|---|---|---|---|---|---|---|---|---|
| | **%** | | | **ppm polymère/scalping sec** | **%** | **Sec.** | | **Visuel** | | |
| L'Estaque | 6,3 | Polymère floculant 70% anionique | Emulsion inverse | | 2,5 | 30-60 | Sec | ++ | 1,1 | 0,5 |
| | | | | 400 | 5 | 30-60 | Sec | + | 2,6 | 0,8 |
| | 12 | | | 400 | 2,5 | 30-60 | Sec | ++ | 2,3 | 1 |
| | | | | | 5 | 30-60 | Sec | ++ | 2 | 1,3 |
| | | | | | 7,5 | 60 | Sec/humide | + | 2 | 1 |
| | 17,4 | | | 400 | 2,5 | 30-60 | Sec | ++ | 2,5 | 1,1 |
| | | | | | 5 | 30-60 | Sec | ++ | 3,5 | 1,2 |
| | | | | | 7,5 | 60 | Sec humide | + | 6,1 | 4 |
| | 12 | Sans traitement | | | 2.5 | 30-60 | Sec | ++ | 3,2 | 1,2 |
| | | | | | 5 | 30-60 | Terreux et Humide | - | | |
| Llynclys | 27 | Polymère floculant 70% anionique | Emulsion inverse | 400 | 5 | 30-60 | Sec | + | 13,4 | 11,8 |
| | | | | | 7,5 | 30-60 | Terreux et humide | + | | |
| | | Sans traitement | | | 5 | 30-60 | Sec | ++ | 10,6 | 6,7 |
| | | | | | 7,5 | 30-60 | Terreux et humide | - | | |
| Dowlow | 27 | Polymère floculant 70% anionique | Emulsion inverse | 400 | 2,5 | 30-60 | Sec | ++ | 3,6 | 1,9 |
| | | | | | 5 | 3 | Sec | + | 4,2 | 1,9 |
| | | | | 300 | 5 | 30-60 | Sec humide | + | | |
| | | | | 200 | 5 | 30-60 | Sec | + | | |
| | | Sans traitement | | | 2,5 | 30-60 | Sec | ++ | 4,1 | 1,8 |
| | | | | | 5 | 30-60 | Terreux humide | - | | |

Les résultats visuels concernant la séparation fines argileuses/granulats ont été classés dans les trois groupes suivants : non satisfaisant (-), satisfaisant (+), très satisfaisant (++).

Ces résultats montrent une nette amélioration de la propreté des granulats traités par le procédé selon l'invention autant en termes de bleu de méthylène (MBV) qu'en termes de mesure visuelle, particulièrement pour des produits de scalpage ayant une humidité supérieure à 2,5%.

### 3. Test comparatif de diverses formes de floculants

Le procédé selon l'invention a été mis en pratique en utilisant différentes formes de floculant. Le floculant utilisé est un polymère de type anionique acrylamide/acrylate de sodium 30/70 sous forme soit :
- d'émulsion inverse le DP/FP2461B (teneur en polymère 35%, poids moléculaire de l'ordre 20 000 000 g/mol) de la société SNF Floerger,
- de poudre micronisée, l'AN 970 SH (particules inférieures à 150microns, poids moléculaire de l'ordre 18 000 000 g/mol) de la société SNF Floerger, ou
- de solution liquide correspondant à cette même poudre micronisée mise en solution à 2%.

Les résultats de ces traitements sont présentés dans le tableau 2. Les produits de scalpage ont été traités selon le procédé décrit ci-dessus. Les résultats de ce tableau indiquent bien que l'utilisation de l'émulsion inverse permet d'obtenir les meilleurs résultats en terme de propreté des granulats.

**Tableau 2**

| **Traitement floculant - Emulsion inverse - poudre - solution** | | | | | | | | | | |
|---|---|---|---|---|---|---|---|---|---|---|
| **Scalping** | **Teneur en fines %** | **Traitement** | **Forme (2)** | **Dosage ppm polymère /scalping sec.** | **Humidité scalping %** | **Tps de malaxage minimum en secondes** | **Aspect** | **Séparation Visuel** | **MBV en g/kg 6/10mm** | **MBV en g/kg >10mm** |
| L'Estaque | 12 | Floculant | Emulsion inverse | 400 | 7,5 | 60 | Sec/humide | + | 2.0 | 1,0 |
| | | | Poudre | | 7,5 | 60 | Sec | + | 2,3 | 1.0 |
| | | | Solution | | 7,5 | 60 | Sec | + | 2,9 | 1,6 |

### 4. Dosage

Le procédé selon l'invention a été mis en pratique en utilisant différents dosages de floculant. Le floculant utilisé est un polymère de type anionique acrylamide/acrylate de sodium 30/70 commercialisé par la société SNF Floerger. Les résultats de ces traitements sont présentés dans le tableau 3.

**Tableau 3**

| Traitement floculant - Emulsion inverse - Dosage | | | | | | | | | | |
|---|---|---|---|---|---|---|---|---|---|---|
| Scalping | Teneur en fines | Traitement | Forme (2) | Dosage | Humidité scalping | Tps de malaxage min. | Aspect | Séparation | MBV en g/kg 6/10mm | MBV en g/kg >10mm |
| | % | | | ppm polymère /scalping sec. | % | Sec. | | Visuel | | |
| L'Estaque | 12 | Floculant | Emulsion inverse | 200 | 5 | 30-60 | Sec/humide | + | 3,5 | 1,8 |
| | | | | 300 | 5 | 30-60 | Sec | ++ | 2,6 | 1,2 |
| | | | | 400 | 5 | 30-60 | Sec | ++ | 2,3 | 1,3 |
| | | Sans traitement | | | 2,5 | 30-60 | Sec | ++ | 3,2 | 1,2 |
| | | | | | 5 | 30-60 | Terreux et humide | - | | |

La propreté de produits de scalpage non traités par un floculant est également indiquée à titre comparatif. Le procédé mis en pratique est celui décrit ci-dessus. Les résultats de ces tests font apparaître qu'un dosage allant de 300 à 400 ppm de polymère/scalping sec est satisfaisant et que le traitement par floculant permet une nette amélioration de la propreté des granulats obtenus par criblage, particulièrement pour des produits de scalpage humides.

Il est bien entendu que toute caractéristique décrite en rapport avec n'importe quel mode de réalisation peut être réalisée seule, ou en combinaison avec d'autres caractéristiques décrites et peut aussi être utilisée en combinaison avec une ou plusieurs caractéristiques de n'importe quel autre mode de réalisation, ou n'importe quelle combinaison de n'importe quel autre des modes de réalisation.

## Revendications

1. Procédé de traitement d'un mélange comprenant des granulats et des matières argileuses, ledit procédé comprenant une étape de malaxage d'un floculant à haut poids moléculaire avec ledit mélange comprenant des granulats et des matières argileuses, et une étape de fractionnement, ledit procédé étant **caractérisé par** un ajout de solvant inférieur ou égal à 15% en poids par rapport au poids total de l'ensemble comportant ledit floculant et le mélange comprenant les granulats et les matières argileuses.

2. Procédé selon la revendication 1, **caractérisé en ce que** le mélange comprenant des granulats et des matières argileuses présente une humidité comprise entre 1 et 10% (pourcentage massique par rapport au poids du mélange comprenant des granulats et des matières argileuses), de préférence entre 1 et 8%, et plus particulièrement entre 2,5 et 8%.

3. Procédé selon la revendication 1 ou 2, **caractérisé en ce que** ledit floculant présente un poids moléculaire supérieur à 1 000 000 g/mol, de préférence supérieur à 10 000 000g/mol.

4. Procédé selon l'une quelconque des revendications 1 à 3, **caractérisé en ce que** ladite étape de fractionnement comprend une étape de criblage et/ou de tamisage.

5. Procédé selon l'une quelconque des revendications 1 à 4, **caractérisée en ce que** ledit floculant est un polymère organique.

6. Procédé selon la revendication 5, **caractérisé en ce que** ledit polymère est un copolymère, tel qu'un copolymère acrylamide/monomère cationique ou acrylamide/monomère anionique.

7. Procédé selon la revendication 6, **caractérisé en ce que** ledit copolymère est un copolymère acrylamide/acrylate de sodium.

8. Procédé selon la revendication 7, **caractérisé en ce que** ledit copolymère présente des proportions respectives d'environ un tiers d'acrylamide pour deux tiers d'acrylate de sodium.

9. Procédé selon la revendication 5, **caractérisé en ce que** ledit polymère est choisi dans le groupe constitué par les polymères constitués des monomères suivants : acrylamide, méthylacrylamide, dialkylaminoalkyl acrylate, dialkylaminoalkyl méthacrylate, dialkylaminoalkyl acrylamide, dialkylaminoalkyl méthylacrylamide, diallylamine, methyldiallylamine, ainsi que de leurs sels.

10. Procédé selon les revendications 5 et 9, **caractérisé en ce que** ledit polymère est un polymère d'acrylamide ou de méthylacrylamide.

11. Procédé selon la revendication 5, **caractérisé en ce que** ledit polymère est choisi dans le groupe constitué par les polymères constitués des monomères suivants : monomères possédant une fonction carboxylique tels que l'acide acrylique et l'acide méthacrylique, les monomères possédant une fonction acide sulfonique, tels que l'acide 2-acrylamido-2- méthylpropane sulfonique et leurs sels.

12. Procédé selon l'une quelconque des revendications 1 à 11, **caractérisé en ce que** la quantité de floculant utilisé est choisie dans une gamme de dosage allant de 0,02 à 0,06 % en poids de mélange sec comprenant des granulats et des matières argileuses.

13. Procédé selon l'une quelconque des revendications 1 à 12, **caractérisé en ce que** ledit floculant est sous forme d'une émulsion inverse de type eau-dans-huile.

14. Procédé selon l'une quelconque des revendications 1 à 13, **caractérisé en ce que** ledit mélange comprenant des granulats et des matières argileuses est un produit de scalpage.

## Claims

1. A process for treatment of a mixture comprising aggregates and clay substances, said process comprising a step of mixing a flocculent having a high molecular weight with said mixture comprising aggregates and clay substances, and a step of fractionation, said process being **characterised by** an addition of a solvent of less than or equal to 15% by weight relative to the total weight of the assembly comprising said flocculent and the mixture comprising the aggregates and the clay materials.

2. The process according to claim 1, **characterised in that** the mixture comprising aggregates and clay substances has a moisture content of between 1 and 10% (mass percentage based on the weight of the mixture comprising aggregates and clay substances), preferably between 1 and 8%, and more particularly between 2.5 and 8%.

3. The process according to claim 1 or claim 2, **characterised in that** said flocculent has a molecular weight greater than 1 000 000 g/mol, preferably greater than 10 000 000 g/mol.

4. The process according to any one of claims 1 to 3, **characterised in that** said fractionation step comprises a screening and/or sieving step.

5. The process according to any one of claims 1 to 4, **characterised in that** said flocculent is an organic polymer.

6. The process according to claim 5, **characterised in that** said polymer is a copolymer, such as an acrylamide/cationic monomer copolymer or an acrylamide/anionic monomer copolymer.

7. The process according to claim 6, **characterised in that** said copolymer is an acrylamide/sodium acrylate copolymer.

8. The process according to claim 7, **characterised in that** said copolymer has respective proportions of approximately one third acrylamide for two thirds sodium acrylate.

9. The process according to claim 5, **characterised in that** said polymer is selected from the group constituted by polymers constituted of the following monomers: acrylamide, methylacrylamide, dialkylaminoalkyl acrylate, dialkylaminoalkyl methacrylate, dialkylaminoalkyl acrylamide, dialkylaminoalkyl methylacrylamide, diallylamine, methyldiallylamine, and the salts thereof.

10. The process according to claim 5 and claim 9, **characterised in that** said polymer is an acrylamide or methylacrylamide polymer.

11. The process according to claim 5, **characterised in that** said polymer is selected from the group constituted by polymers constituted of the following monomers: monomers having a carboxylic function such as acrylic acid and methacrylic acid, the monomers having a sulphonic acid function, such as 2-acrylamido-2-methylpropane sulphonic acid, and the salts thereof.

12. The process according to any one of claims 1 to 11, **characterised in that** the quantity of flocculent used is selected from a dosage range of from 0.02 to 0.06 % by weight of the dry mixture comprising aggregates and clay substances.

13. The process according to any one of claims 1 to 12, **characterised in that** said flocculent is in the form of an inverse water-in-oil emulsion.

14. The process according to any one of claims 1 to 13, **characterised in that** said mixture comprising aggregates and clay substances is a scalping product.

## Patentansprüche

1. Verfahren zur Behandlung eines Gemischs, das Granulate und tonartige Materialien enthält, wobei das Verfahren einen Schritt des Mischens eines Flockungsmittels mit hohem Molekulargewicht mit dem Gemisch, das Granulate und tonartige Materialien enthält, und einen Schritt des Fraktionierens umfasst, wobei das Verfahren **gekennzeichnet ist durch** eine Zugabe von weniger als oder gleich 15% Gew.-% Lösungsmittel, bezogen auf das Gesamtgewicht der Anordnung, die das Flockungsmittel und das Gemisch, das Granulate und tonartige Materialien enthält, umfasst.

2. Verfahren nach Anspruch 1, **dadurch gekennzeichnet, dass** das Gemisch, das Granulate und tonartige Materialien enthält, eine Feuchte zwischen 1 und 10% (Masseanteil, bezogen auf das Gewicht des Gemischs, das Granulate und tonartige Materialien enthält), vorzugsweise zwischen 1 und 8% und insbesondere zwischen 2,5 und 8% aufweist.

3. Verfahren nach Anspruch 1 oder 2, **dadurch gekennzeichnet, dass** das Flockungsmittel ein Molekulargewicht von mehr als 1.000.000 g/mol, vorzugsweise mehr als 10.000.000 g/mol aufweist.

4. Verfahren nach einem der Ansprüche 1 bis 3, **dadurch gekennzeichnet, dass** der Schritt des Fraktionierens einen Schritt des Sichtens und/oder des Siebens umfasst.

5. Verfahren nach einem der Ansprüche 1 bis 4, **dadurch gekennzeichnet, dass** das Flockungsmittel ein organisches Polymer ist.

6. Verfahren nach Anspruch 5, **dadurch gekennzeichnet, dass** das Polymer ein Copolymer, wie ein Acrylamid/kationisches Monomer- oder Acrylamid/anionisches Monomer-Copolymer, ist.

7. Verfahren nach Anspruch 6, **dadurch gekennzeichnet, dass** das Copolymer ein Acrylamid/Natriumacrylat-Copolymer ist.

8. Verfahren nach Anspruch 7, **dadurch gekennzeichnet, dass** das Copolymer jeweilige Verhältnissanteile von ungefähr einem Drittel Acrylamid zu zwei Drittel Natriumacrylat aufweist.

9. Verfahren nach Anspruch 5, **dadurch gekennzeichnet, dass** das Polymer aus der Gruppe ausgewählt ist, die von den Polymeren gebildet ist, die von den folgenden Monomeren gebildet sind: Acrylamid, Methylacrylamid, Dialkylaminoalkylacrylat, Dialkylaminoalkylmethacrylat, Dialkylaminoalkylacrylamid, Dialkylaminoalkylmethacrylamid, Diallylamin, Methyldiallylamin, sowie von deren Salzen.

10. Verfahren nach den Ansprüchen 5 und 9, **dadurch gekennzeichnet, dass** das Polymer ein Acrylamidpolymer oder Methacrylamidpolymer ist.

11. Verfahren nach Anspruch 5, **dadurch gekennzeichnet, dass** das Polymer aus der Gruppe ausgewählt ist, die von den Polymeren gebildet ist, die von den folgenden Monomeren gebildet sind: Monomere, die eine Carboxylfunktion haben, wie Acrylsäure und Methacrylsäure, die Monomere, die eine Sulfonsäurefunktion haben, wie 2-Acrylamido-2-methylpropansulfonsäure und deren Salze.

12. Verfahren nach einem der Ansprüche 1 bis 11, **dadurch gekennzeichnet, dass** die Menge von verwendetem Flockungsmittel aus einem Dosierbereich von 0,02 bis 0,06 Gew.-% des Trockengemischs, das Granulate und tonartige Materialien enthält, ausgewählt ist.

13. Verfahren nach einem der Ansprüche 1 bis 12, **dadurch gekennzeichnet, dass** das Flockungsmittel in Form einer umgekehrten Wasser-in-Öl-Emulsion vorliegt.

14. Verfahren nach einem der Ansprüche 1 bis 13, **dadurch gekennzeichnet, dass** das Gemisch, das Granulate und tonartige Materialien enthält, ein Vorabsiebungsprodukt ist.
